# EUROPÄISCHE PATENTSCHRIFT

(11) **EP 3 616 950 B1**
(45) Veröffentlichungstag und Bekanntmachung des Hinweises auf die Patenterteilung: **27.12.2023**
(21) Anmeldenummer: 19192978.5
(22) Anmeldetag: 22.08.2019
(51) Int. Cl.: B60H 1/32, B60K 11/04

(54) **KRAFTFAHRZEUG MIT EINEM WÄRMETAUSCHER**
MOTOR VEHICLE WITH A HEAT EXCHANGER
VÉHICULE AUTOMOBILE DOTÉ D'UN ÉCHANGEUR DE CHALEUR

(30) Priorität: 30.08.2018 DE 102018121218
(43) Veröffentlichungstag der Anmeldung: 04.03.2020
(73) Patentinhaber: MAN Truck & Bus SE, 80995 München (DE)
(72) Erfinder: Rohrmüller, Hans, 82216 Maisach (DE); Kondic, Darko, 85757 Karlsfeld (DE)
(74) Vertreter: v. Bezold & Partner Patentanwälte - PartG mbB

(56) Entgegenhaltungen:
- EP-A1- 3 187 355
- FR-A1- 2 895 324
- US-A- 4 111 275
- US-B1- 9 926 022

## Beschreibung

Die Erfindung betrifft einen Lastkraftwagen mit einem Wärmetauscher.

Bei Lastkraftwagen mit einem Verbrennungsmotor sitzt der Kühler der Antriebsmaschine herkömmlich an der Vorderseite des Fahrzeugs unterhalb der Fahrerkabine. Herkömmlich wird der Kondensator einer Fahrerhaus-Klimaanlage des Lastkraftwagens vor dem Kühler des Lastkraftwagens im direkten Luftstrom zum Kühler angeordnet.

Aus der EP 1 754 652 B1 ist beispielsweise eine fahrzeugfrontseitige Anordnung eines Klimaanlagenkondensators in einer vertikalen Ausrichtung bekannt.

Aus der US 2014/0138077 A1 und der US 2014/0299076 A1 sind Personenkraftwagen bekannt, bei denen ein Kondensator in einer schrägen Ausrichtung angeordnet ist.

Die US 4,111,275 A offenbart ein Fahrerhaus, das mit einem Kühler-Kondensator ausgestattet ist, der unter dem Fahrerhausboden angeordnet ist und sich in einem Abstand vor einem Kühler für einen unter dem Fahrerhaus montierten Motor befindet. Die Kernfläche des Kondensators ist um einen vorbestimmten Winkel gegenüber der Senkrechten des Fahrzeugs nach vorne oder hinten geneigt. Mit dieser Anordnung wird die Wirkung relativ heißer Luft, die durch den Kondensator zum Kühler strömt, minimiert, und es wurde sichergestellt, dass genügend relativ kühle Luft durch den Kühler strömt, um eine Überhitzung des Motors zu verhindern. Der Erfindung liegt die Aufgabe zu Grunde, ein verbessertes und/oder alternatives Kraftfahrzeug mit Wärmetauscher vorzusehen.

Die Aufgabe wird gelöst durch die Merkmale des unabhängigen Anspruchs 1. Vorteilhafte Weiterbildungen sind in den abhängigen Ansprüchen angegeben.

Die Erfindung betrifft ein Kraftfahrzeug, nämlich einen Lastkraftwagen. Das Kraftfahrzeug weist einen Luftführungskanal auf, der sich zwischen einer Einlassöffnung an einer Vorderseite des Kraftfahrzeugs und einer Auslassöffnung an einer Unterseite des Kraftfahrzeugs erstreckt. Das Kraftfahrzeug weist zudem einen Wärmetauscher auf. Der Wärmetauscher ist in einer im Wesentlichen horizontalen Ausrichtung oder in einer Ausrichtung mit einem Winkel zu einer Horizontalen (Horizontalachse) kleiner als oder gleich 45°, vorzugsweise kleiner als oder gleich 25° (z. B. kleiner als oder gleich 10° oder 5°), in dem Luftführungskanal zum Wärmeaustausch mit Luft, die den Luftführungskanal durchströmt, angeordnet.

Die horizontale Anordnung oder annähernd horizontale Ausrichtung des Wärmetauschers bietet eine Vielzahl von Vorteilen. Insbesondere ermöglicht eine derartige Ausrichtung des Wärmetauschers, des ein Fahrerhaus bodennah angeordnet werden kann, da in Vertikalrichtung gesehen kaum Bauraum für den Wärmetauscher benötigt wird. Der Wärmetauscher beschränkt einen Bauraum an der Vorderseite des Kraftfahrzeugs nicht. Die Einlassöffnung kann verkleinert werden. Die horizontale Anordnung hat auch keinen negativen Einfluss auf eine erzielbare Bodenfreiheit und einen erzielbaren Böschungswinkel des Kraftfahrzeugs. Bei einem bodennahen Fahrerhaus kann zudem ein Bauraum im Bereich einer Instrumententafel nicht oder kaum eingeschränkt sein.

Zweckmäßig kann das Fahrerhaus als eine Lastkraftwagen-Fahrerkabine ausgeführt sein.

In einem Ausführungsbeispiel ist der Wärmetauscher als ein Kondensator, vorzugsweise ein Klimaanlagen-Kondensator, ausgebildet. Alternativ oder zusätzlich ist der Wärmetauscher in einer Klimaanlage (z. B. Fahrerhaus-Klimaanlage) des Kraftfahrzeugs umfasst.

In einer Weiterbildung weist die Klimaanlage zusätzlich ein Gebläse, einen Heizwärmetauscher und/oder einen Verdampfer auf. Vorzugsweise sind das Gebläse, der Heizwärmetauscher und/oder der Verdampfer über dem Wärmetauscher und/oder dem Luftführungskanal angeordnet, vorzugsweise in einer Vertikalrichtung betrachtet überlappend und/oder innerhalb einer Instrumententafel des Kraftfahrzeugs.

Zweckmäßig kann eine Instrumententafel des Kraftfahrzeugs über dem Wärmetauscher und/oder dem Luftführungskanal angeordnet sein, vorzugsweise in einer Vertikalrichtung betrachtet überlappend.

In einem weiteren Ausführungsbeispiel ist der Wärmetauscher in, angrenzend an oder benachbart zu der Auslassöffnung angeordnet.

In einem weiteren Ausführungsbeispiel ist der Wärmetauscher von oben (z. B. einer Oberseite des Wärmetauschers) nach unten (z. B. einer Unterseite des Wärmetauschers) mit Luft durchströmt. Z. B kann der Wärmetauscher in einer Vertikalrichtung nach unten durchströmt sein oder in einer Richtung nach unten und geneigt zu einer Vertikalachse.

In einem weiteren Ausführungsbeispiel weist das Kraftfahrzeug ferner ein Gebläse (z. B. mit einem angetriebenen Lüfterrad) auf, das in dem Luftführungskanal zur Erhöhung des Luftdurchsatzes angeordnet ist.

In einer Weiterbildung ist das Gebläse stromaufwärts oder stromabwärts von dem Wärmetauscher angeordnet und/oder das Gebläse ist in einer Richtung zu dem Wärmetauscher gerichtet.

In einer Ausführungsform ist das Gebläse beabstandet zu dem Wärmetauscher angeordnet. Dies kann aus Bauraumgründen sinnvoll sein und ein großes Gebläse ermöglichen.

In einem weiteren Ausführungsbeispiel ist das Gebläse in einer zur Horizontalen und/oder zur Vertikalen geneigten Ausrichtung in dem Luftführungskanal angeordnet. Dies kann ebenfalls aus Bauraumgründen sinnvoll sein und ein großes Gebläse ermöglichen.

In einer Ausführungsform ist der Wärmetauscher auf gleicher Höhe mit und/oder benachbart zu und/oder abgestützt an und/oder bezüglich einer Vorwärtsfahrtrichtung des Kraftfahrzeugs hinter einem Träger, vorzugsweise einem Frontquerträger des Kraftfahrzeugs (z. B. geschützt) angeordnet.

In einer weiteren Ausführungsform ist der Wärmetausche auf gleicher Höhe mit und/oder benachbart zu und/oder abgestützt an und/oder bezüglich einer Vorwärtsfahrtrichtung des Kraftfahrzeugs hinter einem Unterfahrschutz des Kraftfahrzeugs (z. B. geschützt) angeordnet. Erfindungsgemäß ist die Einlassöffnung mittig zwischen linker und rechter Außenkante der Vorderseite an der Vorderseite angeordnet. Beispielsweise ist die Einlassöffnung in einem Luftstaudruckgebiet, das sich während eines Vorwärtsfahrt des Kraftfahrzeugs ausbildet, angeordnet. Erfindungsgemäß ist die Einlassöffnung an einer (z. B. vertikalen) Fahrzeugfront des Kraftfahrzeugs angeordnet.

Erfindungsgemäß ist die Auslassöffnung mittig zwischen linker und rechter Außenkante der Unterseite an der Unterseite angeordnet. Beispielsweise ist die Auslassöffnung in einem Unterdruckgebiet, das sich während einer Fahrt des Kraftfahrzeugs ausbildet, angeordnet. Erfindungsgemäß ist die Auslassöffnung an einem (z. B. horizontalen) Fahrzeugunterboden des Kraftfahrzeugs angeordnet.

Erfindungsgemäß wird der Fahrzeugunterboden zumindest abschnittsweise von einem Fahrerhaus des Kraftfahrzeugs, vorzugsweise einer Lastkraftwagen-Fahrerkabine, gebildet.

In einer weiteren Ausführungsvariante ist die Einlassöffnung in einer im Wesentlichen vertikalen Ausrichtung angeordnet und/oder die Auslassöffnung ist in einer im Wesentlichen horizontalen Ausrichtung angeordnet.

In einer weiteren Ausführungsvariante ist die Einlassöffnung (vorzugsweise eine Außenabmessung, z. B. maximale Außenkantenlänge, maximaler Durchmesser und/oder Außenumfang, der Einlassöffnung) kleiner als der Wärmetauscher (vorzugsweise eine Außenabmessung, z. B. maximale Außenkantenlänge und/oder Außenumfang, des Wärmetauschers).

In einem Ausführungsbeispiel ist die Einlassöffnung kleiner als die Auslassöffnung und/oder der Luftführungskanal erweitert sich in einer Richtung von der Einlassöffnung zu dem Wärmetauscher zumindest abschnittsweise im Strömungsquerschnitt.

In einem weiteren Ausführungsbeispiel weist der Luftführungskanal mindestens ein Luftführungselement, vorzugsweise eine Luftführungsplatte, auf. Vorzugsweise ist das Luftführungselement zur Umlenkung einer Luftströmung in einer Richtung zu dem Wärmetauscher angeordnet.

In einer Weiterbildung ist das mindestens eine Luftführungselement stromaufwärts von dem Wärmetauscher angeordnet.

In einer Ausführungsform lenkt das mindestens eine Luftführungselement die Luftströmung in einer Vertikalrichtung nach unten oder schräg unten um.

In einer weiteren Ausführungsform bildet das mindestens eine Luftführungselement eine Kanalwand des Luftführungskanals.

Erfindungsgemäß ist der Wärmetauscher, der Luftführungskanal, die Einlassöffnung und/oder die Auslassöffnung in einem Fahrerhaus des Kraftfahrzeugs (z. B. Lastkraftwagen-Fahrerkabine) umfasst.

In einem Ausführungsbeispiel ist der Wärmetauscher, der Luftführungskanal, die Einlassöffnung und/oder die Auslassöffnung bezüglich einer Vorwärtsfahrtrichtung des Kraftfahrzeugs vor einer Vorderachse des Kraftfahrzeugs und/oder bezüglich einer Vertikalrichtung auf gleicher Höhe mit der Vorderachse des Kraftfahrzeugs angeordnet.

In einem weiteren Ausführungsbeispiel ist der Wärmetauscher, der Luftführungskanal, die Einlassöffnung und/oder die Auslassöffnung bezüglich einer Vertikalrichtung auf gleicher Höhe mit einem Bodenbereich eines Fahrerhauses des Kraftfahrzeugs angeordnet. Erfindungsgemäß ist das Kraftfahrzeug als ein Lastkraftwagen mit einem Fahrerhaus (z. B. Lastkraftwagen-Fahrerkabine), das den Lastkraftwagen nach unten hin begrenzt ausgebildet. Beispielsweise weist das Fahrerhaus einen Bodenabstand kleiner als 50 cm, vorzugsweise kleiner als 40 cm, auf. Erfindungsgemäß sind der Wärmetauscher, der Luftführungskanal, die Einlassöffnung und die Auslassöffnung in dem Fahrerhaus umfasst.

Weitere Einzelheiten und Vorteile der Erfindung werden im Folgenden unter Bezug auf die beigefügte Zeichnung beschrieben. Es zeigt:

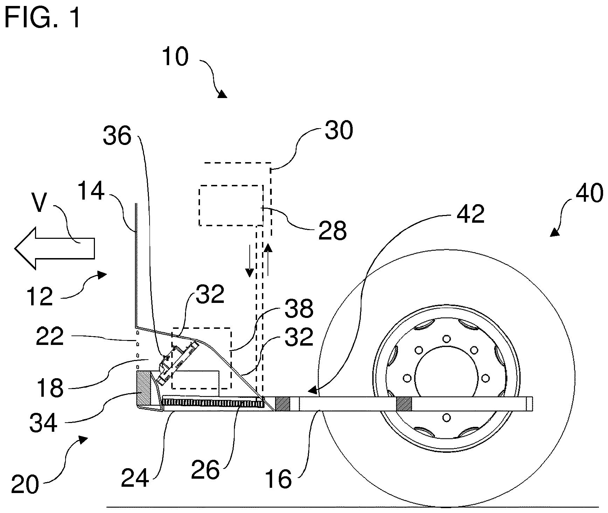

- Figur 1: eine schematische Längsschnittansicht eines vorderen, unteren Abschnitts eines Kraftfahrzeugs gemäß der vorliegenden Offenbarung.

In Figur 1 ist ein vorderer, unterer Abschnitt eines Kraftfahrzeugs 10 dargestellt. Das Kraftfahrzeug 10 ist als ein Lastkraftwagen ausgebildet. Nachfolgend ist ein besonders bevorzugtes Ausführungsbeispiel aufweisend einen Lastkraftwagen mit bodennahem Fahrerhaus beschrieben.

Das Kraftfahrzeug 10 weist eine Lkw-Fahrerkabine oder ein Fahrerhaus 12 (nur abschnittsweise in Figur 1 dargestellt) auf. Das Fahrerhaus 12 begrenzt das Kraftfahrzeug 10 zum Boden hin. Das Fahrerhaus 12 kann beispielsweise selbsttragend sein. Das Fahrerhaus 12 kann beispielsweise an einer Rückseite des Fahrerhauses 12 mit einem Hauptrahmen (nicht dargestellt) des Kraftfahrzeugs 10, zum Beispiel starr, verbunden sein. So kann einerseits ein geringer Bodenabstand des Fahrerhauses 12 ermöglicht werden, da das Fahrerhaus 12 nicht auf einem Hauptrahmen aufsitzt. Andererseits kann ein geringer Bodenabstand des Fahrerhauses 12 auch dadurch ermöglicht werden, dass unter dem Fahrerhaus 12 nicht - wie üblich - eine Antriebseinheit, zum Beispiel eine Verbrennungskraftmaschine, zum Antreiben des Kraftfahrzeugs 10 angeordnet ist, sondern an anderer Stelle des Kraftfahrzeugs 10. Beispielsweise kann das Kraftfahrzeug 10 ein elektrisch angetriebenes Kraftfahrzeug sein. Das Fahrerhaus 12 kann beispielsweise einen Bodenabstand kleiner als oder gleich 50 cm, 45 cm, 40 cm oder 35 cm aufweisen. Ein geringer Bodenabstand kann bspw. den Komfort bei häufigem Ein- und Aussteigen erhöhen.

Das Kraftfahrzeug 10 weist eine Fahrzeugfront 14 auf. Die Fahrzeugfront 14 ist dem Fahrerhaus 12 zugeordnet. Die Fahrzeugfront 14 kann sich beispielsweise im Wesentlichen vertikal oder nahezu vertikal erstrecken, wie dargestellt ist.

Das Kraftfahrzeug 10 weist einen Fahrzeugunterboden 16 auf. Der Fahrzeugunterboden 16 ist dem Fahrerhaus 12 zugeordnet. Der Fahrzeugunterboden 16 kann sich beispielsweise im Wesentlichen horizontal oder nahezu horizontal erstrecken, wie dargestellt ist.

Das Kraftfahrzeug 10 weist einen Luftführungskanal 18 auf. Der Luftführungskanal 18 ist in einem vorderen, unteren Eckbereich 20 des Kraftfahrzeugs 10 angeordnet. Der vordere, untere Eckbereich 20 ist dem Fahrerhaus 12 zugeordnet. Der vordere, untere Eckbereich 20 ist durch einen unteren Bereich der Fahrzeugfront 14 und einen vorderen Bereich des Fahrzeugunterbodens 16 gebildet.

Der Luftführungskanal 18 erstreckt sich von einer Einlassöffnung 22 zu einer Auslassöffnung 24. Die Einlassöffnung 22 ist an einer Vorderseite des Kraftfahrzeugs 10, an der Fahrzeugfront 14, angeordnet. Die Einlassöffnung 22 weist eine im Wesentlichen vertikale Ausrichtung auf. In der Einlassöffnung 22 kann ein Gitterelement angeordnet sein, wie dargestellt ist. Die Auslassöffnung 24 ist an einer Unterseite des Kraftfahrzeugs 10, am Fahrzeugunterboden 16, angeordnet. Die Auslassöffnung 24 weist eine im Wesentlichen horizontale Ausrichtung auf.

Der Luftführungskanal 18 ist erfindungsgemäß mittig bezüglich einer Querrichtung des Kraftfahrzeugs 10 angeordnet sein. Erfindungsgemäß ist die Einlassöffnung 22 mittig bezüglich einer Querrichtung des Kraftfahrzeugs 10 an der Fahrzeugfront 14 angeordnet. Hier bildet sich während der Vorwärtsfahrt des Kraftfahrzeugs 10 eine Staudruckgebiet, in dem sich Luft aufstaut und somit ein erhöhter Druck vorliegt. Die Luft kann somit druckbeaufschlagt durch die Einlassöffnung 22 in den Luftführungskanal 18 einströmen. Erfindungsgemäß ist die Auslassöffnung 24 mittig bezüglich einer Querrichtung des Kraftfahrzeugs 10 an dem Fahrzeugunterboden 16 angeordnet. Hier bildet sich aufgrund der hohen Strömungsgeschwindigkeit der Luft beim Umströmen des fahrenden Kraftfahrzeugs 10 ein geringer statischer Druck (Unterdruckgebiet) aus. Die Luft kann hier besonders günstig den Luftführungskanal 18 durch die Auslassöffnung 24 verlassen. Ferner können so wirksam Kreisluftströmungen vermieden werden.

Während einer Vorwärtsfahrt des Kraftfahrzeugs in einer Vorwärtsfahrtrichtung V (siehe Pfeil in Figur 1) durchströmt Luft den Luftführungskanal 18. Die Luftströmung tritt durch die Einlassöffnung 22 in den Luftführungskanal 18 ein. Die Luftströmung verlässt den Luftführungskanal 18 durch die Auslassöffnung 24.

Das Kraftfahrzeug 10 weist einen Wärmetauscher 26 auf. Vorzugsweise kann der Wärmetauscher 26 als Kondensator, insbesondere als Klimaanlagen-Kondensator, ausgeführt sein. Eine Klimaanlage 28 (nur schematisch in Figur 1 dargestellt), insbesondere eine Fahrerhaus-Klimaanlage, kann neben dem als Kondensator ausgeführten Wärmetauscher 26 weitere Komponenten aufweisen, z. B. ein Gebläse, einen Heizwärmetauscher, einen Verdampfer und/oder eine Klappensteuerung. Es ist auch möglich, dass der Wärmetauscher 26 kein Klimaanlagen-Kondensator ist, sondern in einer anderen Schaltung integriert ist.

Der Wärmetauscher 26 ist in dem Luftführungskanal 18 angeordnet. Der Wärmetauscher 26 kann in dem Luftführungskanal 18 befestigt sein, zum Beispiel lösbar, zum Beispiel mittels Schrauben. Der Wärmetauscher 26 ist zum Wärmeaustausch zwischen einem Fluid, vorzugsweise einem Kühlmittel (z. B. Klimaanlagen-Kühlmittel), und Luft, die den Luftführungskanal 18 durchströmt, ausgebildet. Im Einzelnen ist der Wärmetauscher 26 in der Auslassöffnung 24 angeordnet. Es ist allerdings auch möglich, den Wärmetauscher 26 an einer anderen Stelle im Luftführungskanal 18 anzuordnen, z. B. angrenzend an die Auslassöffnung 24 oder benachbart zu der Auslassöffnung 24. Durch die Anordnung des Wärmetauschers 26 nahe der Auslassöffnung 24 kann bspw. eine Durchströmung des Wärmetauschers 26 verbessert werden, da, wie bereits beschrieben, bei der Auslassöffnung 24 während der Fahrt des Kraftfahrzeugs 10 ein geringer statischer Druck herrscht.

In dem gezeigten Ausführungsbeispiel ist der Wärmetauscher 26 in einer horizontalen Ausrichtung angeordnet. Es ist auch möglich, den Wärmetauscher 26 beispielsweise annähernd horizontal anzuordnen, zum Beispiel in einem Winkel kleiner als 45° zur Horizontalen. Die horizontale oder annähernd horizontale Anordnung des Wärmetauschers 26 ermöglicht die Verwirklichung einer Vielzahl von Vorteilen.

Ein Bauraum an der Vorderseite des Kraftfahrzeugs 10 wird nicht, wie bei Lastkraftwagen mit vertikalen Kondensatoren üblich, durch den Wärmetauscher 26 beschränkt. Dadurch kann die Lufteintrittsfläche, das heißt die Einlassöffnung 22, verkleinert werden. Insbesondere kann in die Einlassöffnung 22 kleiner der Wärmetauscher 26 ausgeführt sein.

Ferner ergeben sich neue Freiheitsgrade bei der Konstruktion des Kraftfahrzeugs 10, insbesondere bezüglich des Aufbaus und der Anordnung des Fahrerhauses 12. Beispielsweise kann die eingangs beschriebene bodennahe Anordnung des Fahrerhauses 12 erst dadurch ermöglicht werden. Herkömmlich federnd gelagerte Fahrerhäuser, die oberhalb eines Leiterrahmens und eines Verbrennungsmotors angeordnet sind, bieten genügend Platz unterhalb eines Bodens des Fahrerhauses, um einen Kondensators in einer vertikalen Ausrichtung anzuordnen. Bei einer bodennahen Anordnung des Fahrerhauses 12 kann dieser Bauraum so jedoch nicht mehr vorhanden sein.

Es ist möglich, dass durch die horizontale oder nahezu horizontale Anordnung des Wärmetauschers 26 der Böschungswinkel des Kraftfahrzeugs 10 und die Bodenfreiheit des Kraftfahrzeugs 10 nicht eingeschränkt werden.

Es ist auch möglich, dass der Bauraum durch die horizontale oder nahezu horizontale Anordnung des Wärmetauschers 26 im Bereich einer Instrumententafel 30 (nur schematisch in Figur 1 angedeutet) nicht oder kaum eingeschränkt wird. Die zusätzlichen Komponenten der Klimaanlage 28 können innerhalb der Instrumententafel 30 im Fahrerhaus des Kraftfahrzeugs 10 angeordnet sein. Insbesondere können die zusätzlichen Komponenten der Klimaanlage 28 direkt über dem Luftführungskanal 18 sowie den darin angeordneten Komponenten, wie dem Wärmetauscher 26, angeordnet sein. Damit ergibt sich insbesondere eine Anordnung des Wärmetauschers 26 nahe des Verdampfers der Klimaanlage 28. Dies hilft dabei, die Leitungslängen für das eingesetzte Kühlmittel der Klimaanlage 28, insbesondere zwischen dem Wärmetauscher 26 und dem Verdampfer der Klimaanlage 28, kurz zu halten.

Der Wärmetauscher 26 wird von Luft durchströmt, die durch den Luftführungskanal 18 strömt. Im Luftführungskanal wird die Luft schräg nach unten in Richtung zu dem Wärmetauscher 26 und zu der Auslassöffnung 24 abgelenkt. Zur Ablenkung dienen Luftführungselemente 32. Die Luftführungselemente 32 sind vorzugsweise als in die Kanalwand des Luftführungskanals 18 integrierte Luftführungsplatten ausgebildet. Die Luftführungselemente 32 sind bezüglich einer Horizontalen geneigt ausgerichtet, um die durch den Luftführungskanal 18 strömende Luft schräg nach unten abzulenken.

Vorzugsweise ist, wie bereits beschrieben, die Einlassöffnung 22 kleiner als der Wärmetauscher 26. Dementsprechend kann sich der Luftführungskanal 18 von der Einlassöffnung 22 zu dem Wärmetauscher 26 in einem Strömungsquerschnitt erweitern. Die Einlassöffnung 22 kann kleiner als die Auslassöffnung 24 sein.

Der Wärmetauscher 26 kann hinter einem beispielsweise als Unterfahrschutz ausgebildeten Frontquerträger 34 des Kraftfahrzeugs 10 angeordnet sein. DerWärmetauscher 26 kann damit insbesondere im Fahrbetrieb des Kraftfahrzeugs 10 vor Beschädigung geschützt angeordnet sein.

Es ist auch möglich, ein Gebläse 36 im Luftführungskanal 18 anzuordnen. Das Gebläse 36 kann stromaufwärts oder stromabwärts des Wärmetauschers 26 angeordnet sein. Das Gebläse 36 kann dazu ausgebildet sein, die Luftströmung durch den Wärmetauscher 26 zu unterstützen. Das Gebläse 36 kann insbesondere bei Fahrzeugstillstand des Kraftfahrzeugs 10 selektiv eingeschaltet werden. Dadurch kann auch bei Fahrzeugstillstand und ohne Luftumströmung des Kraftfahrzeugs 10 eine Wärmetauscherleistung, insbesondere eine Kondensatorleistung, aufrechterhalten werden. Das Gebläse 36 kann beispielsweise geneigt zur Vertikalen und zur Horizontalen in dem Luftführungskanal 18 angeordnet sein, wie dargestellt ist. Die bereits mehrfach erwähnte, bevorzugte, bodennahe Anordnung des Fahrerhauses 12 kann ferner durch die nachfolgenden Merkmale, einzeln oder in Kombination, ermöglicht werden. Der Wärmetauscher 26, der Luftführungskanal 18, die Einlassöffnung 22 und die Auslassöffnung 24 können bezüglich einer Vorwärtsfahrtrichtung des Kraftfahrzeugs 10 vor einer Vorderachse 40 des Kraftfahrzeugs 10 und bezüglich einer Vertikalrichtung auf gleicher Höhe mit der Vorderachse 40 des Kraftfahrzeugs 10 angeordnet sein. Es ist auch möglich, dass der Wärmetauscher 26, der Luftführungskanal 18, die Einlassöffnung 22 und die Auslassöffnung 24 bezüglich einer Vertikalrichtung auf gleicher Höhe mit einem Bodenbereich 42 des Fahrerhauses 12 angeordnet sind.

### Bezugszeichenliste

- V: Vorwärtsfahrtrichtung
- 10: Kraftfahrzeug
- 12: Fahrerhaus
- 14: Fahrzeugfront
- 16: Fahrzeugunterboden
- 18: Luftführungskanal
- 20: Vorderer, unterer Eckbereich
- 22: Einlassöffnung
- 24: Auslassöffnung
- 26: Wärmetauscher
- 28: Klimaanlage
- 30: Instrumententafel
- 32: Luftführungselement
- 34: Frontquerträger
- 36: Gebläse
- 38: Pedalvorrichtung
- 40: Vorderachse
- 42: Bodenbereich

## Patentansprüche

1. Lastkraftwagen (10) aufweisend:
einen Luftführungskanal (18), der sich zwischen einer Einlassöffnung (22) an einer Vorderseite des Lastkraftwagens (10) und einer Auslassöffnung (24) an einer Unterseite des Lastkraftwagens (10) erstreckt; und
einen Wärmetauscher (26), der in einer im Wesentlichen horizontalen Ausrichtung oder in einer Ausrichtung mit einem Winkel zu einer Horizontalen kleiner als oder gleich 45°, vorzugsweise kleiner als oder gleich 25°, in dem Luftführungskanal (18) zum Wärmeaustausch mit Luft, die den Luftführungskanal (18) durchströmt, angeordnet ist, **dadurch gekennzeichnet, dass**
die Einlassöffnung (22) mittig zwischen linker und rechter Außenkante der Vorderseite an der Vorderseite angeordnet ist, und die Einlassöffnung (22) an einer Fahrzeugfront (14) des Lastkraftwagens (10) angeordnet ist;
die Auslassöffnung (24) mittig zwischen linker und rechter Außenkante der Unterseite an der Unterseite angeordnet ist, und die Auslassöffnung (24) an einem Fahrzeugunterboden (16) des Lastkraftwagens (10) angeordnet ist;
der Lastkraftwagen ein Fahrerhaus (12), das den Lastkraftwagen nach unten hin begrenzt, aufweist; und
der Wärmetauscher (26), der Luftführungskanal (18), die Einlassöffnung (22) und die Auslassöffnung (24) in dem Fahrerhaus (12) umfasst sind.

2. Lastkraftwagen (10) nach Anspruch 1, wobei:
der Wärmetauscher (26) als ein Kondensator, vorzugsweise ein Klimaanlagen-Kondensator, ausgebildet ist; und/oder
der Wärmetauscher (26) in einer Klimaanlage (28) des Lastkraftwagens (10) umfasst ist.

3. Lastkraftwagen (10) nach Anspruch 2, wobei:
die Klimaanlage (28) zusätzlich ein Gebläse, einen Heizwärmetauscher und/oder einen Verdampfer aufweist; und
das Gebläse, der Heizwärmetauscher und/oder der Verdampfer über dem Wärmetauscher (26) und/oder dem Luftführungskanal (18) angeordnet ist, vorzugsweise in einer Vertikalrichtung betrachtet überlappend und/oder innerhalb einer Instrumententafel (30) des Lastkraftwagens (10).

4. Lastkraftwagen (10) nach einem der vorherigen Ansprüche, wobei:
der Wärmetauscher (26) in der Auslassöffnung (24) angeordnet ist, oder
der Wärmetauscher (26) angrenzend an die Auslassöffnung (24) angeordnet ist; oder
der Wärmetauscher (26) benachbart zu der Auslassöffnung (24) angeordnet ist; und/oder
der Wärmetauscher (26) von oben nach unten mit der Luft durchströmt ist.

5. Lastkraftwagen (10) nach einem der vorherigen Ansprüche, ferner aufweisend:
ein Gebläse (36), das in dem Luftführungskanal (18) zur Erhöhung des Luftdurchsatzes angeordnet ist.

6. Lastkraftwagen (10) nach Anspruch 5, wobei:
das Gebläse (36) stromaufwärts oder stromabwärts von dem Wärmetauscher (26) angeordnet ist; und/oder
das Gebläse (36) in einer Richtung zu dem Wärmetauscher (26) gerichtet ist; und/oder
das Gebläse (36) beabstandet zu dem Wärmetauscher (26) angeordnet ist; und/oder
das Gebläse (36) in einer zu einer Horizontalen und/oder zu einer Vertikalen geneigten Ausrichtung in dem Luftführungskanal (18) angeordnet ist.

7. Lastkraftwagen (10) nach einem der vorherigen Ansprüche, wobei:
der Wärmetauscher (26) auf gleicher Höhe mit und/oder benachbart zu und/oder abgestützt an und/oder bezüglich einer Vorwärtsfahrtrichtung (V) des Lastkraftwagens (10) hinter einem Träger, vorzugsweise einem Frontquerträger (34) des Lastkraftwagens (10) angeordnet ist; und/oder
der Wärmetauscher (26) auf gleicher Höhe mit und/oder benachbart zu und/oder abgestützt an und/oder bezüglich einer Vorwärtsfahrtrichtung (V) des Lastkraftwagens (10) hinter einem Unterfahrschutz (24) des Lastkraftwagens (10) angeordnet ist.

8. Lastkraftwagen (10) nach einem der vorherigen Ansprüche, wobei:
die Einlassöffnung (22) in einem Luftstaudruckgebiet, das sich während eines Vorwärtsfahrt des Lastkraftwagens (10) ausbildet, angeordnet ist.

9. Lastkraftwagen (10) nach einem der vorherigen Ansprüche, wobei:
die Auslassöffnung (24) in einem Unterdruckgebiet, das sich während einer Fahrt des Kraftfahrzeugs (10) ausbildet, angeordnet ist.

10. Lastkraftwagen (10) nach einem der vorherigen Ansprüche, wobei:
die Einlassöffnung (22) in einer im Wesentlichen vertikalen Ausrichtung angeordnet ist; und/oder
die Auslassöffnung (24) in einer im Wesentlichen horizontalen Ausrichtung angeordnet ist.

11. Lastkraftwagen (10) nach einem der vorherigen Ansprüche, wobei:
die Einlassöffnung (22) kleiner als der Wärmetauscher (26), ist; und/oder
die Einlassöffnung (22) kleiner als die Auslassöffnung (24) ist; und/oder
der Luftführungskanal (18) sich in einer Richtung von der Einlassöffnung (22) zu dem Wärmetauscher (26) zumindest abschnittsweise im Strömungsquerschnitt erweitert.

12. Lastkraftwagen (10) nach einem der vorherigen Ansprüche, wobei:
der Luftführungskanal (18) mindestens ein Luftführungselement (32), vorzugsweise eine Luftführungsplatte, aufweist, das zur Umlenkung einer Luftströmung in einer Richtung zu dem Wärmetauscher (26) angeordnet ist.

13. Lastkraftwagen (10) nach Anspruch 12, wobei:
das mindestens eine Luftführungselement (32) stromaufwärts von dem Wärmetauscher (26) angeordnet ist; und/oder
das mindestens eine Luftführungselement (32) die Luftströmung in einer Vertikalrichtung nach unten oder schräg unten umlenkt; und/oder
das mindestens eine Luftführungselement (32) eine Kanalwand des Luftführungskanals (18) bildet.

14. Lastkraftwagen (10) nach einem der vorherigen Ansprüche, wobei:
der Wärmetauscher (26) und/oder der Luftführungskanal (18) in einer Querrichtung des Lastkraftwagens (10) seitlich neben einer Gas- und/oder Bremspedalvorrichtung (38) des Lastkraftwagens (10) angeordnet ist; und/oder
der Wärmetauscher (26), der Luftführungskanal (18), die Einlassöffnung (22) und/oder die Auslassöffnung (24) bezüglich einer Vorwärtsfahrtrichtung des Lastkraftwagens (10) vor einer Vorderachse (40) des Lastkraftwagens (10) und/oder bezüglich einer Vertikalrichtung auf gleicher Höhe mit der Vorderachse (40) des Lastkraftwagens (10) angeordnet ist; und/oder
der Wärmetauscher (26), der Luftführungskanal (18)und/oder die Auslassöffnung (24) bezüglich einer Vertikalrichtung auf gleicher Höhe mit einem Bodenbereich (42) eines Fahrerhauses (12) des Lastkraftwagens (10) angeordnet ist.

15. Lastkraftwagen (10) nach einem der vorherigen Ansprüche, wobei:
das Fahrerhaus (12) einen Bodenabstand kleiner als 50 cm, vorzugsweise kleiner als 40 cm, aufweist.

## Claims

1. A truck (10) comprising:
an air guiding channel (18) extending between an inlet opening (22) at a front side of the truck (10) and an outlet opening (24) at a bottom side of the truck (10); and
a heat exchanger (26) arranged in a substantially horizontal orientation or in an orientation with an angle to a horizontal less than or equal to 45°, preferably less than or equal to 25°, in the air guiding channel (18) for heat exchange with air flowing through the air guiding channel (18),
**characterised in that**
the inlet opening (22) is arranged centrally between left and right outer edges of the front side at the front side, and the inlet opening (22) is arranged at a vehicle front (14) of the truck (10);
the outlet opening (24) is arranged centrally between left and right outer edges of the underside at the underside, and the outlet opening (24) is arranged at a vehicle underbody (16) of the truck (10);
the truck comprises a cab (12) delimiting the truck downwardly; and
the heat exchanger (26), the air guiding channel (18), the inlet opening (22) and the outlet opening (24) are included in the cab (12).

2. The truck (10) according to claim 1, wherein:
the heat exchanger (26) is configured as a condenser, preferably an air conditioning condenser; and/or
the heat exchanger (26) is included in an air conditioning system (28) of the truck (10).

3. The truck (10) according to claim 2, wherein:
the air conditioning system (28) additionally comprises a fan, a heat exchanger and/or an evaporator; and
the fan, the heat exchanger and/or the evaporator is arranged above the heat exchanger (26) and/or the air guiding channel (18), preferably overlapping as viewed in a vertical direction and/or within an instrument panel (30) of the truck (10).

4. The truck (10) according to any of the previous claims, wherein:
the heat exchanger (26) is arranged in the outlet opening (24), or
the heat exchanger (26) is arranged adjoining the outlet opening (24); or
the heat exchanger (26) is arranged adjacent to the outlet opening (24); and/or
the heat exchanger (26) has air flowing therethrough from top to bottom.

5. The truck (10) according to any one of the preceding claims, further comprising:
a fan (36) arranged in the air guiding channel (18) for increasing the air flow rate.

6. The truck (10) according to claim 5, wherein:
said fan (36) being arranged upstream or downstream of said heat exchanger (26); and/or
the fan (36) is directed in a direction towards the heat exchanger (26); and/or
the fan (36) is arranged at a distance from the heat exchanger (26); and/or
the fan (36) is arranged in the air guiding channel (18) in an orientation inclined to a horizontal and/or to a vertical.

7. The truck (10) according to any one of the preceding claims, wherein:
the heat exchanger (26) is arranged at the same level as and/or adjacent to and/or supported on and/or with respect to a forward travel direction (V) of the truck (10) behind a support, preferably a front cross member (34) of the truck (10); and/or
the heat exchanger (26) is arranged at the same level as and/or adjacent to and/or supported on and/or with respect to a forward direction of travel (V) of the truck (10) behind an underride guard (24) of the truck (10).

8. The truck (10) according to any of the previous claims, wherein:
the inlet opening (22) is arranged in an air pressure accumulation area formed during a forward travel of the truck (10).

9. The truck (10) according to any one of the preceding claims, wherein:
the outlet opening (24) is arranged in a negative pressure area formed during a travel of the motor vehicle (10).

10. The truck (10) according to any one of the preceding claims, wherein:
the inlet opening (22) is arranged in a substantially vertical orientation; and/or
the outlet opening (24) is arranged in a substantially horizontal orientation.

11. The truck (10) according to any one of the preceding claims, wherein:
the inlet opening (22) is smaller than the heat exchanger (26); and/or
the inlet opening (22) is smaller than the outlet opening (24); and/or
the air guiding channel (18) widens in flow cross-section at least in sections in a direction from the inlet opening (22) to the heat exchanger (26).

12. The truck (10) according to any of the previous claims, wherein:
the air guiding channel (18) comprises at least one air guiding element (32), preferably an air guiding plate, arranged to deflect an air flow in a direction towards the heat exchanger (26).

13. The truck (10) according to claim 12, wherein:
said at least one air guide member (32) is arranged upstream of said heat exchanger (26); and/or
said at least one air guiding member (32) redirects the air flow in a downward or downward oblique vertical direction; and/or
the at least one air guiding member (32) forms a channel wall of the air guiding channel (18).

14. The truck (10) according to any one of the preceding claims, wherein:
the heat exchanger (26) and/or the air guiding channel (18) is arranged in a transverse direction of the truck (10) laterally adjacent to an accelerator and/or brake pedal device (38) of the truck (10); and/or
the heat exchanger (26), the air guiding channel (18), the inlet opening (22) and/or the outlet opening (24) is arranged in front of a front axle (40) of the truck (10) with respect to a forward travel direction of the truck (10) and/or at the same level as the front axle (40) of the truck (10) with respect to a vertical direction; and/or
the heat exchanger (26), the air guiding channel (18) and/or the outlet opening (24) is arranged at the same level with a floor portion (42) of a cab (12) of the truck (10) with respect to a vertical direction.

15. The truck (10) according to any one of the preceding claims, wherein:
the cab (12) comprises a floor clearance smaller than 50 cm, preferably smaller than 40 cm.

## Revendications

1. Camion (10) présentant :
un canal de guidage d'air (18) s'étendant entre une ouverture d'entrée (22) sur un côté avant du camion (10) et une ouverture de sortie (24) sur un côté inférieur du camion (10) ; et
un échangeur de chaleur (26) agencé selon une orientation essentiellement horizontale ou selon une orientation avec un angle par rapport à une horizontale inférieur ou égal à 45°, de préférence inférieur ou égal à 25°, dans le canal de guidage d'air (18) pour échanger de la chaleur avec l'air traversant le canal de guidage d'air (18),
**caractérisé en ce que**
l'ouverture d'entrée (22) est agencée sur le côté avant au centre entre les bords extérieurs gauche et droit du côté avant, et l'ouverture d'entrée (22) est agencée sur un avant de véhicule (14) du camion (10) ;
l'ouverture de sortie (24) est agencée sur le côté inférieur au centre entre les bords extérieurs gauche et droit du côté inférieur, et l'ouverture de sortie (24) est agencée sur un dessous de véhicule (16) du camion (10) ;
le camion présente une cabine de conducteur (12), qui délimite le camion vers le bas ; et
l'échangeur de chaleur (26), le canal de guidage d'air (18), l'ouverture d'entrée (22) et l'ouverture de sortie (24) sont compris dans la cabine de conducteur (12) .

2. Camion (10) selon la revendication 1, dans lequel :
l'échangeur de chaleur (26) est configuré sous la forme d'un condenseur, de préférence un condenseur d'installation de climatisation ; et/ou
l'échangeur de chaleur (26) est compris dans une installation de climatisation (28) du camion (10).

3. Camion (10) selon la revendication 2, dans lequel :
l'installation de climatisation (28) présente en outre un ventilateur, un échangeur de chaleur de chauffage et/ou un évaporateur ; et
le ventilateur, l'échangeur de chaleur de chauffage et/ou l'évaporateur est agencé au-dessus de l'échangeur de chaleur (26) et/ou du canal de guidage d'air (18), de préférence en se chevauchant, considérés dans une direction verticale, et/ou à l'intérieur d'un tableau de bord (30) du camion (10).

4. Camion (10) selon l'une quelconque des revendications précédentes, dans lequel :
l'échangeur de chaleur (26) est agencé dans l'ouverture de sortie (24), ou
l'échangeur de chaleur (26) est agencé de manière adjacente à l'ouverture de sortie (24) ; ou
l'échangeur de chaleur (26) est agencé de manière voisine de l'ouverture de sortie (24) ; et/ou
l'échangeur de chaleur (26) est traversé par l'air de haut en bas.

5. Camion (10) selon l'une quelconque des revendications précédentes, présentant en outre :
un ventilateur (36) agencé dans le canal de guidage d'air (18) pour augmenter le débit d'air.

6. Camion (10) selon la revendication 5, dans lequel :
le ventilateur (36) est agencé en amont ou en aval de l'échangeur de chaleur (26) ; et/ou
le ventilateur (36) est orienté dans une direction vers l'échangeur de chaleur (26) ; et/ou
le ventilateur (36) est agencé à distance de l'échangeur de chaleur (26) ; et/ou
le ventilateur (36) est agencé selon une orientation inclinée par rapport à une horizontale et/ou à une verticale dans le canal de guidage d'air (18).

7. Camion (10) selon l'une quelconque des revendications précédentes, dans lequel :
l'échangeur de chaleur (26) est agencé à la même hauteur que et/ou de manière voisine de et/ou appuyé sur et/ou, par rapport à une direction de déplacement vers l'avant (V) du camion (10), derrière un support, de préférence une traverse avant (34) du camion (10) ; et/ou
l'échangeur de chaleur (26) est agencé à la même hauteur que et/ou de manière voisine de et/ou appuyé sur et/ou, par rapport à une direction de déplacement vers l'avant (V) du camion (10), derrière une protection antiencastrement (24) du camion (10).

8. Camion (10) selon l'une quelconque des revendications précédentes, dans lequel :
l'ouverture d'entrée (22) est agencée dans une zone de pression d'air dynamique qui se forme pendant un déplacement vers l'avant du camion (10).

9. Camion (10) selon l'une quelconque des revendications précédentes, dans lequel :
l'ouverture de sortie (24) est agencée dans une zone de dépression qui se forme pendant un déplacement du véhicule automobile (10).

10. Camion (10) selon l'une quelconque des revendications précédentes, dans lequel :
l'ouverture d'entrée (22) est agencée selon une orientation essentiellement verticale ; et/ou
l'ouverture de sortie (24) est agencée selon une orientation essentiellement horizontale.

11. Camion (10) selon l'une quelconque des revendications précédentes, dans lequel :
l'ouverture d'entrée (22) est plus petite que l'échangeur de chaleur (26) ; et/ou
l'ouverture d'entrée (22) est plus petite que l'ouverture de sortie (24) ; et/ou
le canal de guidage d'air (18) s'élargit dans une direction allant de l'ouverture d'entrée (22) à l'échangeur de chaleur (26), au moins par sections, dans la section transversale d'écoulement.

12. Camion (10) selon l'une quelconque des revendications précédentes, dans lequel :
le canal de guidage d'air (18) présente au moins un élément de guidage d'air (32), de préférence une plaque de guidage d'air, qui est agencé pour dévier un courant d'air dans une direction vers l'échangeur de chaleur (26) .

13. Camion (10) selon la revendication 12, dans lequel :
l'au moins un élément de guidage d'air (32) est agencé en amont de l'échangeur de chaleur (26) ; et/ou
l'au moins un élément de guidage d'air (32) dévie le courant d'air vers le bas ou en biais dans une direction verticale ; et/ou
l'au moins un élément de guidage d'air (32) forme une paroi de canal du canal de guidage d'air (18).

14. Camion (10) selon l'une quelconque des revendications précédentes, dans lequel :
l'échangeur de chaleur (26) et/ou le canal de guidage d'air (18) est agencé dans une direction transversale du camion (10), latéralement à côté d'un dispositif de pédale d'accélérateur et/ou de frein (38) du camion (10) ; et/ou
l'échangeur de chaleur (26), le canal de guidage d'air (18), l'ouverture d'entrée (22) et/ou l'ouverture de sortie (24) sont agencés avant un essieu avant (40) du camion (10) par rapport à une direction de déplacement vers l'avant du camion (10) et/ou à la même hauteur que l'essieu avant (40) du camion (10) par rapport à une direction verticale ; et/ou
l'échangeur de chaleur (26), le canal de guidage d'air (18) et/ou l'ouverture de sortie (24) sont agencés à la même hauteur qu'une zone de plancher (42) d'une cabine de conducteur (12) du camion (10) par rapport à une direction verticale.

15. Camion (10) selon l'une quelconque des revendications précédentes, dans lequel :
la cabine de conducteur (12) présente une distance au sol inférieure à 50 cm, de préférence inférieure à 40 cm.
